# EUROPEAN PATENT SPECIFICATION

(11) **EP 2 558 297 B1**
(45) Date of publication and mention of the grant of the patent: **07.03.2018**
(21) Application number: 11769172.5
(22) Date of filing: 12.04.2011
(51) Int. Cl.: B32B 37/24, B32B 5/16, B32B 21/02, B32B 21/08, B44C 5/04, E04F 15/10, B27N 7/00, B32B 38/06, E04C 2/24, E04F 15/22

(54) **POWDER OVERLAY**
PULVERÜBERZUG
REVÊTEMENT EN POUDRE

(30) Priority: 13.04.2010 SE 1050363
(43) Date of publication of application: 20.02.2013
(73) Proprietor: Välinge Innovation AB, 263 65 Viken (SE)
(72) Inventor: PERVAN, Darko, S-263 61 Viken (SE); ZIEGLER, Göran, S-263 62 Viken (SE)
(74) Representative: Westeman, Maria
(86) International application number: PCT/SE2011/050446
(87) International publication number: WO 2011/129755

(56) References cited:
- WO-A1-2006/013469
- WO-A1-2009/124704
- WO-A2-01/92037
- WO-A2-2009/065769
- DE-A1- 1 815 312
- DE-B3-102007 046 532
- US-A- 3 135 643
- US-A- 4 430 375
- US-A1- 2009 155 612

## Description

### Technical Field

The disclosure generally relates to the field of fibre-based panels with wear resistant surfaces for building panels, preferably floor panels. The disclosure relates to building panels with such wear resistance surface and to production methods to produce such panels.

### Field of Application

Embodiments of the present invention are particularly suitable for use in floating floors, which are formed of floor panels with a wood fibre core and a decorative wear resistant surface. The following description of technique, problems of known systems and objects and features of the invention will therefore, as a non-restrictive example, be aimed above all at this field of application and in particular at floorings which are similar to traditional floating wood fibre based laminate floorings. Embodiments of the invention do not exclude floors that are glued down to a sub floor.

It should be emphasized that embodiments of the invention can be used as a panel or as a surface layer, which is for example glued to a core. The disclosure can also be used in applications as for example wall panels, ceilings, and furniture components and similar. It could also be used in floorings with optional surface materials such as cork or wood, in order to improve wear and design properties

### Background

Wood fibre based direct pressed laminated flooring usually comprises a core of a 6-12 mm fibre board, a 0.2 mm thick upper decorative surface layer of laminate and a 0.1-0.2 mm thick lower balancing layer of laminate, plastic, paper or like material.

A laminate surface generally comprise two paper sheets, a 0.1 mm thick printed decorative paper and a transparent 0.05-0.1 mm thick overlay paper applied over the decorative paper and intended to protect the decorative paper from abrasion. The print on the decorative non-transparent paper is only some 0.01 mm thick. The transparent overlay, which is made of refined fibres (e.g. α-cellulose fibres), comprises small hard and transparent aluminium oxide particles. The refined fibres are rather long, about 2-5 mm and this gives the overlay paper the required strength. In order to obtain the transparency, all natural resins that are present in the virgin wood fibres, have been removed and the aluminium oxide particles are applies as a very thin layer over the decorative paper. The surface layer of a laminate floor is characterized in that the decorative and wear properties are generally obtained with two separate layers one over the other.

The printed decorative paper and the overlay are impregnated with melamine resin and laminated to a wood fibre based core under heat and pressure.

The small aluminium oxide particles could have a size in the range of 20 - 100 microns. The particles could be incorporated in the surface layer in several ways. For example they could be incorporated in the pulp during the manufacturing of the overlay paper. They could also be sprinkled on the wet lacquer during impregnation procedure of the overlay or incorporated in the lacquer used for impregnation of the overlay.

The wear layer could also be produced without a cellulose overlay. In such a case melamine resin and aluminium oxide particles are applied as a lacquered layer directly on the decorative paper with similar methods as described above. Such a wear layer is generally referred to as liquid overlay.

With this production method a very wear resistant surface could be obtained and this type of surface is mainly used in laminate floorings but it could also be used in furniture components and similar applications. High quality laminate floorings have a wear resistance of 4000-6000 revolutions, which corresponds to the abrasion classes AC4 and AC5 measured with a Taber Abraser according to ISO-standard.

It is also known that the wear resistance of a lacquered wood surface could be improved considerably by incorporating aluminium oxide particles in the transparent lacquer covering the wood surface.

The most common core material used in laminate floorings is fibreboard with high density and good stability usually called HDF - High Density Fibreboard. Sometimes also MDF - Medium Density Fibreboard - is used as core. Other core materials such as particleboard are also used.

Recently new "paper free" floor types have been developed where powder technology is used to obtain a solid laminate surface comprises a substantially homogenous mix of non-processed wood fibres, binders and wear resistant particles. Such floor types are below referred to as "solid laminate" floors. The wear resistant particles are preferably aluminium oxide particles and the binders are preferably thermosetting resins such as melamine. Other suitable materials are for example silica or silicon carbide. In general all these materials are preferably applied in dry form as a mixed powder on a HDF core and cured under heat and pressure to a 0.2 - 1.0 mm solid (opaque) laminate layer. The solid layer in solid laminate floors provides high impact and wears resistance.

Powder technology is also used to produce floors with a surface that combines the paper technology and powder technology. Such floor types are below referred to as "wood powder laminate floors" A decorative paper is applied on a sub layer comprising wood powder and binders. The decorative paper is protected by a conventional overlay. The main advantages with such floors are that deep embossing and improved impact resistance could be obtained.

The wear resistance in wood powder laminate floors is generally not sufficient when surfaces with deep embossing is formed since the protruding parts at the surface are subject to high wear. Even some solid laminate floor with several thin layers comprising different colours suffer from a low wear resistance.

It would be a great advantage if wear resistance could be improved in a cost efficient way.

The above description of various known aspects is the applicants' characterization of such, and is not an admission that any of the above description is prior art.

### Definition of Some Terms

In the following text, the visible surface of the installed floor panel is called "front side", while the opposite side of the floor panel, facing the sub floor, is called "rear side". The sheet-shaped material that comprises the major part of a panel and provides the panel with the required stability is called "core". When the core is coated with a surface layer closest to the front side and preferably also a balancing layer closest to the rear side, it forms a semi-manufacture, which is called "floor board" or "floor element" in the case where the semi-manufacture, in a subsequent operation, is divided into a plurality of floor elements. When the floor elements are machined along their edges so as to obtain their final shape with the joint system, they are called "floor panels". By "surface layer" are meant all layers which give the panel its decorative properties and its wear resistance and which are applied to the core closest to the front side covering preferably the entire front side of the floorboard. By "decorative surface layer" is meant a layer, which is mainly intended to give the floor its decorative appearance. "Wear layer" relates to a layer, which is mainly adapted to improve the durability of the front side.

By "horizontal plane" is meant a plane, which extends parallel to the outer part of the surface layer. By "horizontally" is meant parallel to the horizontal plane and by "vertically" is meant perpendicularly to the horizontal plane. By "up" is meant towards the front side and by "down" towards the rear side.

By processed wood fibres are meant wood fibres that are processed, e.g. by removing natural resins such as lignin, such that they are transparent in a cured binder.

### Known Technique and Problems thereof

In laminate floors the wear and abrasion resistance is typically provided by aluminium oxide containing overlay papers that are impregnated and/or coated as for example described in US 2009/0208646 A1. It also known to provide an overlay by applying a liquid layer of a resin e.g. a melamine resin into which aluminium oxide is applied. This type may also be reinforced by adding e.g. a cellulosic flock in liquid layer. It is also known to produce an overlay paper by adding the aluminium oxide in the paper production process.

The application of such an overlay paper or liquid layers is complicated and costly and it would be an advantage if the production method could be simplified. In addition, in deeply embossed products the wear properties are limited since the protruding parts of the surface are subjected to a higher stress than would be the case for more moderately embossed surfaces.

The recently developed class of paper free laminate floors can typically be made with superior wear properties, but in certain formulations superficial design elements, prints or other effects could need a surface protection exceeding what could be achieved through the normal formulation.

US 2009/155612 discloses such a paper free laminate floor. This document discloses a building panel comprising a core and a surface layer comprising a substantially homogenous mix of wood fibres, a binder and wear resistant particles. The wood fibres of the surface layer are unrefined and comprise natural resins such as lignin.

It is known that dry and wet overlays, which are produced by production methods where for example thermosetting resins in dry or wet form are mixed with aluminium oxide, without any fibres could also be used. Aluminium oxide particles mixed with melamine resin powder could for example be applied on a wood veneer prior to pressing and a wear resistant surface could be obtained without any surface coating after pressing. Such a production method does not give sufficient wear properties.

### Objects and Summary

An objective of certain embodiments of the invention is to provide a building panel, preferably a floor panel with a transparent wear resistant layer, which could be produced in a more cost effective way than with the present know technology,

A second objective of certain embodiments is to provide a building panel, preferably a floor panel with a transparent wear resistant layer which can be used to make deeply embossed floor products with higher wear resistance than possible with presently known technology.

A third objective of certain embodiments is to provide a building panel, preferably a floor panel with a transparent wear resistant layer which allows for making floors having a better worn surface appearance.

A fourth objective of certain embodiments is to provide a formulation suited for application with scattering machines that can yield any or all of the objectives stated above.

The embodiments of the invention are not limited to the above objectives.

An aspect of the invention is a production method to produce a building panel with decorative surface layer with a transparent wear resistant surface layer comprising the steps below and preferably in the indicated sequence:
- applying a decorative layer on a carrier;
- applying a dry powder layer comprising a mix of processed wood fibres, binder and wear resistant particles on the decorative layer; and
- curing the mix by applying heat and pressure to obtain a decorative surface layer comprising a transparent wear resistant layer.

The powder is easy to handle and provides a cost efficient production method. The processed wood fibres provide, together with the cured binder, a reinforced matrix for the wear resistant particles, which are essentially homogenously distributed throughout the thickness of the cured layer. This matrix prevents the wear resistant particles from coming off during wear of the surface layer and combined with the essentially homogenously distribution a significant increased wear resistance is achieved.

In an embodiment, the powder mix may comprise processed wood fibres in the range of about1% to about 50%, preferably about 20%, by weight of the powder mix, binder in the range of about 50% to about 90%, preferably about 70%, by weight of the powder mix, and wear resistant particles in the range of about 0% to about 15%, preferably about 10%, by weight of the powder mix.

The curing is preferably performed by applying the heat and pressure by, for example, press plates, during about 5-200 seconds, preferably during 5-30 seconds. The heat applied may be in the range of about 140 °C to about 200 °C, preferably in the range about 160 to about 180 °C. The pressure applied is in the range of about 20 to about 60 kg/cm2, preferably about 40 kg/cm2.

The binder is preferably melamine formaldehyde resin and the wear resistant particles are preferably aluminium oxide or silica. The wear resistant layer is according to one preferred embodiment pressed with an embossed matrix that forms protruding parts on the surface.

The dry powder comprises according to one embodiment processed wood fibres that are essentially all small individual fibres, which may be smaller than about 1.0 mm, preferably smaller than 0.5 mm. The small fibres are preferably not bonded to each other as for example long fibres in paper layers and a HDF core, and can be compressed, formed and displaced in all direction during the initial part of a pressing operation until the binder cures. The uncured transparent wear layer preferably behaves similar to a paste or a liquid substance and floats during the initial part of the curing stage.

The fibre size may be measured in different ways:
- An actual individual fibre could be measured in diameter and length.
- A fibre size could be defined by the size of the mesh of the net in the sieve in which the fibres are separated by size and the wanted fraction is sorted out.

For refined fibres used in a wood fibre floor produced from an HDF-board the typical production steps are:
- To bring down the HDF-boards to flakes in a pre mill
- Bring down the flakes to the wanted size in a hammer mill
- Sieve the fibres in a net with a mesh size of 0,3 mm. Often such fibres are defined to be less than 0,3 mm in size. The diameter could though of course be less and the length could be longer due to the elongated shape of the fibre.

The distribution of the fibre sizes after sieving could be defined by measurements of the fibres.

For processed fibres (for example bleached fibres) the mesh size used is often smaller than the one for refined fibres. The sizes of the fibres are defined by the distribution of the sieved material. A typical distribution of fibres size is:
> 32 µm 43,6%
> 90 µm 9,3%
> 160 µm 0,4%

The powder mix and the curing can be adapted such that a larger amount of wear resistant and transparent material is located in the upper parts of the protruding surface portions than on the lower and more compressed portions. This will give a higher wear resistance in the parts that are subject to the highest wear.

The decorative layer may include, for example, paper. The paper may be a printed melamine impregnated paper, for example, a decor sheet composed of melamine resin impregnated cellulose fibres. The paper may be placed directly on the carrier, for example, an HDF board. The paper may be placed on a scattering of decorative powder mix. For example, the decorative powder may include wood fibres and a binder, and optionally, a pigment and/or wear resistant particles. The wood fibres of the decorative power may be processed wood fibres or unprocessed wood fibres, such as recycled wood fibres.

The decorative layer may include, for example, a scattering of decorative powder mix. For example, the decorative powder may include wood fibres and a binder, and optionally, a pigment and/or wear resistant particles. The wood fibres of the decorative power may be processed wood fibres or unprocessed wood fibres, such as recycled wood fibres. The decorative layer may include, for example, multiple layers of scattered decorative powder mix.

The decorative layer may include, for example, a wood veneer. The wood veneer may be placed directly on the carrier, for example, an HDF board. The wood veneer may be placed on a scattering of decorative powder mix. For example, the decorative powder may include wood fibres and a binder, and optionally, a pigment and/or wear resistant particles. The wood fibres of the decorative power may be processed wood fibres or unprocessed wood fibres, such as recycled wood fibres.

The decorative layer may include, for example, cork. The cork may be placed directly on the carrier, for example, an HDF board. The cork may be placed on a scattering of decorative powder mix. For example, the decorative powder may include wood fibres and a binder, and optionally, a pigment and/or wear resistant particles. The wood fibres of the decorative power may be processed wood fibres or unprocessed wood fibres, such as recycled wood fibres.

A second aspect of the invention is a method of manufacturing a building panel, wherein the method comprises the steps of:
- applying a decorative layer on a carrier;
- applying a dry powder layer comprising a mix of a thermoplastic material and wear resistant particles on the decorative layer; and
- applying heat and pressure on the powder layer to obtain a decorative surface layer comprising a transparent wear resistant layer.

The wear resistant particles may comprise aluminium oxide and/or silica. The mix may include processed wood fibres.

In an embodiment, the powder mix may comprise processed wood fibres in the range of about1% to about 50%, preferably about 20%, by weight of the powder mix, thermoplastic material in the range of about 50% to about 90%, preferably about 70%, by weight of the powder mix, and wear resistant particles in the range of about 0% to about 15%, preferably about 10%, by weight of the powder mix.

The heat and pressure on the powder layer to obtain the decorative surface layer is preferably performed by applying the heat and the pressure by, for example, press plates, during about 5-200 seconds, preferably during 5-30 seconds. The heat applied may be in the range of about 140 °C to about 200 °C, preferably in the range about 160 to about 180 °C. The pressure applied is in the range of about 20 to about 60 kg/cm2, preferably about 40 kg/cm2. The process may be a so called hot-hot process.

A third aspect of the invention is a method of manufacturing a building panel, wherein the method comprises the steps of:
- applying a dry powder layer comprising a mix of processed wood fibres, binder and wear resistant particles directly on a wood panel; and
- applying heat and pressure on the powder layer to obtain a transparent wear resistant layer.

The resulting product is, for example, a clear and glossy wood product having excellent chemical and abrasion resistance.

The wear resistant particles may comprise aluminium oxide and/or silica. The binder may comprise a thermoplastic material.

The thermoplastic material in the second and third aspect may be transparent material such as vinyl particles. Several plastic materials in powder form can be used such as E-PVC, S-PVC, PVA, PET, PS, SAN, PMMA and similar.

The plastic powder should preferably have a glass transition temperature below the intended processing temperature and a melting point higher than the intended processing temperature. The plastic can further comprise functional groups such as hydroxy-, carboxy- and amino functionalities. Blends of plastics can also be used.

### Brief Description of the Drawings

The invention will in the following be described in connection to preferred embodiments and in greater detail with reference to the appended exemplary drawings, wherein
- Fig 1: illustrates a conventional laminate floor panel with an embossed portion;
- Fig 2: illustrates an improved laminate floor with embossed portions;

### Detailed Description of Embodiments

A laminate floor having good mechanical wear properties are made from the application of heat and pressure to layers of various types of sheets of papers over which a powder layer is scattered. The sheets are positioned over a core, such as a medium or high-density fibreboard. Under the core one or more sheets of paper can be positioned. The sheets are made using standard papermaking techniques and chemistry and are typically impregnated using standard impregnation techniques and chemistry. In an embodiment the powder layer is composed of a homogenous mixture of powder resin, fibres and hard particles. The powder resin is preferably a thermoset resin such as amino resin or a mixture of such resins. A preferred resin is melamine formaldehyde resin. The fibres are preferably transparent such as processed wood fibres but also other transparent fibres such as glass fibres can be used. Fibres having limited transparency such as various inorganic fibres, metal fibres or unprocessed wood fibres can be used but would not yield the desired transparency of the protective layer. Preferred hard particles to yield the final good mechanical wear properties include aluminium oxide, silicon oxide and mixtures thereof. The use of heat and pressure convert the layers of sheets and the scattered powder layer into a laminate

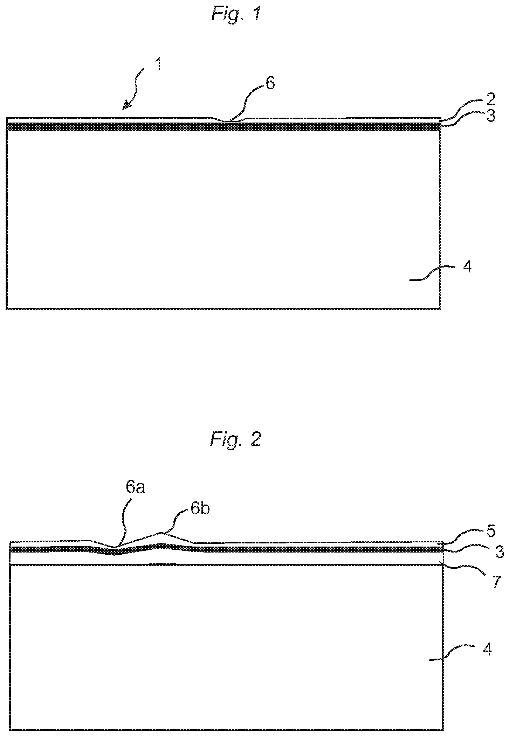

A typical laminate floor (Figure 1) is composed from top and bottom with the following layers: (2) an overlay sheet composed of melamine resin impregnated cellulose fibres in which abrasive particles are incorporated, (3) a decor sheet composed of melamine resin impregnated cellulose fibres, (4) a core material such as high density fibre board. A balancing sheet composed of melamine resin impregnated cellulose fibres is typically used on the backside of the panel. A laminate floor typically has embossed portions (6) extending below the main surface (1). If the embossed portions extend to far from the main surface poor surface appearance can occur due to the limitation of the impregnated papers.

An improved laminate floor (Figure 2) according to one non restrictive embodiment of the invention comprises from top to bottom the following layers: (5) a protective powder layer, powder overlay, composed of melamine resin powder, processed wood fibres and abrasive particles, (3) a decor sheet composed of melamine resin impregnated cellulose fibres, (7) an optional powder layer comprising of melamine resin powder and processed wood fibres, (4) a core material such as high density fibre board. A balancing sheet composed of melamine resin impregnated cellulose fibres is typically used. Since the protective powder layer does not have a restricted movement in neither horizontal nor vertical directions embossed potions can be found both below (6a) and above (6b) the main surface (1). The resulting products have a higher amount of the protective melamine resins and aluminium oxide particles in the protruding surface portion (6b) giving an improved wear resistance compared to what is found with conventional overlays.

The impregnation of overlay papers are typically made in impregnation lines such as for example described in US 2009/0208646 A1. Such impregnation lines require investments and handling of impregnation fluids that typically have limited shelf life. Such a process could be improved by the use of a powder overlay.

The decorative surface layer may be embossed and the thickness of the transparent surface layer varies such that the thickness in an upper portion exceeds a thickness of a lower portion.

Aspects of the invention may also include:
Item 1. A method of manufacturing a building panel, wherein the method comprises the steps of:
   - applying a decorative layer on a carrier;
   - applying a dry powder layer, comprising a mix of a thermoplastic material and wear resistant particles, on the decorative layer; and
   - applying heat and pressure on the powder layer to obtain a decorative surface layer comprising a transparent wear resistant layer.
Item 2. The method according to item 1, wherein the wear resistant particles comprise aluminium oxide and/or silica.
Item 3. The method according to item 1, wherein the mix comprises processed wood fibres.

### Example 1: Direct laminate product having a conventional overlay (comparative example)

A laminate product comprising a HDF carrier board, a balancing paper, a printed melamine impregnated paper and an overlay was pressed in a short cycle press using a force of 40 kg/cm2 for 25 seconds at a surface temperature of 160°C. The press plate was a virtually smooth glossy plate.

The resulting product was a laminated surface having an abrasion resistance exceeding the demands for AC3 according to the test method in EN13329:2006 (E) with a good surface appearance.

### Example 2: Deeply embossed laminate product having a conventional overlay (comparative example)

A laminate product comprising a HDF carrier board, a balancing paper, a printed melamine impregnated paper and an overlay was pressed in a short cycle press using a force of 40 kg/cm2 for 25 seconds at a surface temperature of 160°C. The press plate was a deeply structured plate with parts having 0.7 mm depth.

The resulting product was a laminated surface having an abrasion resistance failing the demands for AC2 according to the test method in EN13329:2006 (E). In addition the surface appearance was not good enough since the paper sheets of the laminate cracked at the large embossings.

### Example 3: Deeply embossed direct laminate product having a protective layer made with regular fibres (comparative example)

A laminate product comprising a HDF carrier board, a balancing paper, a printed melamine impregnated paper and 300 g/m2 of a protective layer comprising a homogenous mixture of recycled fibres that have not been processed, melamine powder resins and aluminium oxide particles was pressed in a short cycle press using a force of 40 kg/cm2 for 25 seconds at a surface temperature of 160°C. The press plate was a virtually smooth press plate.

The resulting product was a laminated surface having an abrasion resistance passing the demands for AC6 according to the test method in EN13329:2006 (E). The surface appearance was not good enough since the fibres in the protective layer were visible.

### Example 4: Deeply embossed direct laminate having a protective layer as per an embodiment of the disclosure.

A laminate product comprising a HDF carrier board, a balancing paper positioned under the HDF, 1000 g/m2 of a scattered sub layer comprising a homogenous mixture of recycled fibres and amino resins, scattered over the HDF, a melamine resins impregnated printed paper positioned over the scatted sub layer and 300 g/m2 of a protective layer comprising a homogenous mixture of processed fibres, melamine powder resins and aluminium oxide particles, scattered over the printed melamine impregnated paper, was pressed in a short cycle press using a force of 40 kg/cm2 for 25 seconds at a surface temperature of 160°C. The press plate was a deeply structured plate with parts having 0.7 mm depth.

The resulting product was a laminated surface having an abrasion resistance passing the demands for AC3 according to the test method in EN13329:2006 (E). The surface appearance was good enough since the fibres in the protective layer was not visible and no cracks of overlay paper were found in the deep embossed parts of the surface.

### Example 5: Deeply embossed paper free building panel having a protective layer as per an embodiment of the disclosure.

150 g/m2 of a protective layer comprising a homogenous mixture of processed fibres, melamine powder resins and aluminium oxide particles, scattered over 150 g/m2 of a decorative layer comprising a homogenous mixture of processed fibres, melamine powder resins, pigment particles and aluminium oxide particles, scattered over 500 g/m2 of a second decorative layer comprising a homogenous mixture of processed fibres, melamine powder resins, pigment particles and aluminium oxide particles was pressed in a short cycle press using a force of 40 kg/cm2 for 25 seconds at a surface temperature of 160 °C. The press plate was a deeply structured plate with parts having 0.7 mm depth.

The resulting product was a deeply structured paper free laminate having an abrasion resistance passing the demands for AC6 according to the test method in EN13329:2006 (E).

The initial surface appearance was excellent since the protective layer protects the surface from micro scratches that typically give products an early worn appearance.

### Example 6: Wood panel having a protective layer as per an embodiment of the disclosure.

A sanded wood panel was scattered with 150 g/m2 of a protective layer comprising a homogenous mixture of processed fibres, melamine powder resins and aluminium oxide particles. The product was compressed at 20 bars for 30 seconds at 160°C using a smooth glossy press plate.

The resulting product was a clear glossy wood product having excellent chemical and abrasion resistance.

## Claims

1. A method of manufacturing a building panel, wherein the method comprises the steps of:
• applying a decorative layer (3) on a carrier (4) wherein the decorative layer includes one of the following:
a paper,
a wood veneer,
cork, or
a scattered decorative powder mix;
• applying a dry powder layer (5) comprising a mix of processed wood fibres, binder and wear resistant particles, on the decorative layer; and
• curing the mix by applying heat and pressure to obtain a transparent wear resistant layer arranged on the decorative layer (3).

2. The method as claimed in claim 1, wherein the panel is a floor panel.

3. The method as claimed in claim 1 or 2, wherein the carrier (4) is a wood based board, preferably a HDF or MDF board.

4. The method as claimed in any one of the preceding claims, wherein the wear resistant particles are aluminium oxide.

5. The method as claimed in any one of the preceding claims, wherein the paper is a printed paper.

6. The method as claimed in any one of the preceding claims, wherein the curing step comprises pressing mix is against an embossed matrix.

7. The method as claimed in claim 6, wherein the pressing against the embossed matrix creates an embossing depth that exceeds a thickness of the decorative layer (3).

8. The method as claimed in claim 6, wherein the pressing against the embossed matrix creates an embossing depth that exceeds the combined thickness of the decorative layer (3) and the transparent wear layer (5).

9. The method as claimed in any one of the preceding claims, wherein the decorative layer (3) comprises a transparent paper based overlay comprising aluminium oxide.

10. The method as claimed in in any one of the preceding claims, wherein the decorative layer (3) comprises a transparent paper based overlay comprising aluminium oxide applied over a lower dry powder layer (5) the lower dry powder layer comprising wood fibres and a binder.

11. The method as claimed in any one of the preceding claims, wherein the processed wood fibres are essentially all smaller than 1.0 mm, preferably smaller than 0.5 mm.

12. The method as claimed in any one of the preceding claims, wherein the heat and pressure is applied during 5-200 seconds, preferably during 5-30 seconds.

13. The method as claimed in any one of the preceding claims, wherein the heat applied is in the range of about 140 °C to about 200 °C, preferably in the range of about 160 °C to about 180 °C.

14. The method as claimed in any one of the preceding claims, wherein the pressure applied is in the range of about 20 to about 60 kg/cm2, preferably about 40 kg/cm2.

15. The method as claimed in any one of the preceding claims, wherein the thickness of the transparent surface layer (5) exceeds the thickness of the decorative layer (3).

## Patentansprüche

1. Verfahren zur Herstellung eines Gebäudepaneels, wobei das Verfahren die Schritte umfasst:
Aufbringen einer dekorativen Schicht (3) auf einen Träger (4), wobei die dekorative Schicht eines der folgenden aufweist:
ein Papier,
ein Holzfurnier,
Kork oder
eine verteilte dekorative Pulvermischung;
Aufbringen einer Trockenpulverschicht (5) mit einer Mischung aus verarbeiteten Holzfasern, einem Binder und verschleißfesten Teilchen auf der dekorativen Schicht; und
Aushärten der Mischung durch Anwendung von Wärme und Druck, um eine transparente verschleißfeste Schicht zu erhalten, die auf der dekorativen Schicht (3) angeordnet ist.

2. Verfahren nach Anspruch 1, wobei das Paneel ein Bodenpaleel ist.

3. Verfahren nach Anspruch 1 oder 2, wobei der Träger (4) eine auf Holz beruhende Platte, vorzugsweise eine HDF- oder MDF-Platte ist.

4. Verfahren nach einem der vorhergehenden Ansprüche, wobei die verschleißfesten Teilchen aus Aluminiumoxid sind.

5. Verfahren nach einem der vorhergehenden Ansprüche, wobei das Papier ein gedrucktes Papier ist.

6. Verfahren nach einem der vorhergehenden Ansprüche, wobei der Schritt des Aushärtens umfasst: Pressen der Mischung gegen eine eingeprägte Struktur.

7. Verfahren nach Anspruch 6, wobei das Pressen gegen die eingeprägte Struktur eine Prägetiefe erzeugt, die eine Dicke der dekorativen Schicht (3) übersteigt.

8. Verfahren nach Anspruch 6, wobei das Pressen gegen die eingeprägte Struktur eine Prägetiefe erzeugt, die die kombinierte Dicke der dekorativen Schicht (3) und der transparenten verschleißfesten Schicht (5) übersteigt.

9. Verfahren nach einem der vorhergehenden Ansprüche, wobei die dekorative Schicht (3) einen auf transparentem Papier beruhenden Überzug mit Aluminiumoxid aufweist.

10. Verfahren nach einem der vorhergehenden Ansprüche, wobei die dekorative Schicht (3) einen auf transparentem Papier beruhenden Überzug mit Aluminiumoxid aufweist, der über einer unteren Trockenpulverschicht (5) aufgebracht ist, wobei die untere Trockenpulverschicht Holzfasern und einen Binder aufweist.

11. Verfahren nach einem der vorhergehenden Ansprüche, wobei im Wesentlichen alle verarbeiteten Holzfasern kleiner als 1,0 mm, vorzugsweise kleiner als 0,5 mm sind.

12. Verfahren nach einem der vorhergehenden Ansprüche, wobei die Wärme und der Druck 5-200 Sekunden, vorzugsweise 5-30 Sekunden angewendet werden.

13. Verfahren nach einem der vorhergehenden Ansprüche, wobei die Wärme in einem Bereich von ungefähr 140 °C bis ungefähr 200 °C, vorzugsweise im Bereich von ungefähr 160 °C bis ungefähr 180 °C angewendet wird.

14. Verfahren nach einem der vorhergehenden Ansprüche, wobei der angewendete Druck im Bereich von ungefähr 20 bis ungefähr 60 kg/cm2, vorzugsweise bei ungefähr 40 kg/cm2 liegt.

15. Verfahren nach einem der vorhergehenden Ansprüche, wobei die Dicke der transparenten Oberflächenschicht (5) größer ist als die Dicke der dekorativen Schicht (3).

## Revendications

1. Procédé de fabrication d'un panneau de construction, dans lequel le procédé comprend les étapes de :
• application d'une couche décorative (3) sur un support (4) où la couche décorative comprend un des suivants :
un papier,
un placage de bois,
du liège, ou
un mélange de poudre décorative dispersée ;
• application d'une couche de poudre sèche (5) comprenant un mélange de fibres de bois traité, de liant et de particules résistant à l'usure, sur la couche décorative ; et
• durcissement du mélange par application de chaleur et de pression pour obtenir une couche résistant à l'usure transparente disposée sur la couche décorative (3).

2. Procédé selon la revendication 1, dans lequel le panneau est un panneau de sol.

3. Procédé selon la revendication 1 ou 2, dans lequel le support (4) est un panneau à base de bois, de préférence un panneau HDF ou MDF.

4. Procédé selon l'une quelconque des revendications précédentes, dans lequel les particules résistant à l'usure sont de l'oxyde d'aluminium.

5. Procédé selon l'une quelconque des revendications précédentes, dans lequel le papier est un papier imprimé.

6. Procédé selon l'une quelconque des revendications précédentes, dans lequel l'étape de durcissement comprend la compression du mélange contre une matrice de gaufrage.

7. Procédé selon la revendication 6, dans lequel la compression contre la matrice de gaufrage crée une profondeur de gaufrage qui excède une épaisseur de la couche décorative (3).

8. Procédé selon la revendication 6, dans lequel la compression contre la matrice de gaufrage crée une profondeur de gaufrage qui excède l'épaisseur combinée de la couche décorative (3) et de la couche d'usure transparente (5).

9. Procédé selon l'une quelconque des revendications précédentes, dans lequel la couche décorative (3) comprend un recouvrement à base de papier transparent comprenant de l'oxyde d'aluminium.

10. Procédé selon l'une quelconque des revendications précédentes, dans lequel la couche décorative (3) comprend un recouvrement à base de papier transparent comprenant de l'oxyde d'aluminium appliqué sur une couche de poudre sèche inférieure (5), la couche de poudre sèche inférieure comprenant des fibres de bois et un liant.

11. Procédé selon l'une quelconque des revendications précédentes, dans lequel les fibres de bois traité sont essentiellement toutes inférieures à 1,0 mm, de préférence inférieures à 0,5 mm.

12. Procédé selon l'une quelconque des revendications précédentes, dans lequel la chaleur et la pression sont appliquées pendant 5-200 secondes, de préférence pendant 5-30 secondes.

13. Procédé selon l'une quelconque des revendications précédentes, dans lequel la chaleur appliquée se trouve dans l'intervalle d'environ 140°C à environ 200°C, de préférence dans l'intervalle d'environ 160°C à environ 180°C.

14. Procédé selon l'une quelconque des revendications précédentes, dans lequel la pression appliquée se trouve dans l'intervalle d'environ 20 à environ 60 kg/cm², de préférence d'environ 40 kg/cm².

15. Procédé selon l'une quelconque des revendications précédentes, dans lequel l'épaisseur de la couche de surface transparente (5) excède l'épaisseur de la couche décorative (3).
